# EUROPEAN PATENT APPLICATION

(11) **EP 4 667 185 A2**
(43) Date of publication of application: **24.12.2025**
(21) Application number: 25214814.3
(22) Date of filing: 14.11.2023
(51) Int. Cl.: B29C 48/92

(54) **APPARATUS AND METHOD FOR PRODUCING A CROSS-SECTIONALLY SHAPED AEROSOL-GENERATING MATERIAL EXTRUDATE**

(30) Priority: 25.11.2022 AM 20220113
(62) Divisional of application: 23806224.4
(71) Applicant: Philip Morris Products S.A., 2000 Neuchâtel (CH)
(72) Inventor: PRESTIA, Ivan, 20121 Milano (IT); SIMONYAN, Anzhelika, 0010 Yerevan (AM)
(74) Representative: Grünecker Patent- und Rechtsanwälte PartG mbB

(57) **Abstract**

The invention relates to extrudate (9) comprising aerosol-generating material (23) with a cross-sectional shape, wherein the cross-sectional shape of the extrudate is a hollow chamber profile (15). The hollow chamber profile forms a flow channel in the extrudate. The invention further relates to an aerosol-generating article having flow channels within the extrudate, directly relating to the airflow properties of the aerosol-generating material.

## Description

The present disclosure relates to an apparatus for producing an extrudate comprising an aerosol-generating material, a method for extruding an aerosol-generating material and a use of an extruder for extruding an aerosol-generating material.

Aerosol-generating articles refer not only to filter cigarettes and other smoking articles in which material is combusted to form smoke, but also those articles that generate an aerosol from an aerosol-generating material without requiring combustion thereof. Such articles are often designated as "heat-not-burn" aerosol-generating articles, since an aerosol-generating material is heated to a relatively low temperature to induce the formation of an aerosol but prevent the combustion of material contained within the aerosol-generating material. Usually, the aerosol composition generated by such a "heat-not-burn" aerosol-generating article is substantially based on homogenized tobacco material, which typically composes the majority of the tobacco content of the aerosol-generating material. Due to this, the composition and quality of homogenized tobacco material plays a critical role in the overall quality and user-experience of the aerosol-generating article.

Generally, homogenized tobacco material can be formed as cast leaf or as a reconstituted tobacco sheet. For the former, ground tobacco and a binder, amongst other constituents, are mixed to form a slurry, which may undergo thermal-mechanical processing prior to being cast on a moving metal belt to produce the cast leaf. Alternatively, a slurry exhibiting a lower viscosity and higher water-content as that for the cast leaf process may be used to create a reconstituted tobacco sheet, according to a process that resembles paper-making. Subsequent thereto, the cast leaf or reconstituted tobacco sheet is wound onto a bobbin for storage and transportation purposes, before being unwound for further processing.

Such further processing of the homogenized tobacco material may include the crimping of the cast leaf or reconstituted tobacco sheet, which consequently results in a corrugated form thereof. The corrugated cast leaf or reconstituted tobacco sheet may then be compressed, folded and/or rolled into a cylindrical form, which is subsequently separated into individual segments that may be inserted into a corresponding aerosol-generating article, as the aerosol-generating material.

As briefly noted, the production steps for manufacturing aerosol-generating material for the insertion and use in an aerosol-generating article are copious. Furthermore, each manufacturing step requires complex and intricate machinery and a relatively large production area within a production hall, for example. Due to this, each phase of fabrication is typically implemented as a batch process, with each step undergone relatively independent from the previous and/or subsequent manufacturing steps. This can result in unwanted downtime between the individual production steps, requiring precise calculation and scheduling of the production process to minimize said downtime and optimize the entire production line. If this is not done a loss in production capacity and associated capital could occur.

Consequently, the present invention aims to provide an alternative to the above-described production process, in particular by condensing certain production steps to enable a continuous production process, at least between certain individual manufacturing steps.

According to a first aspect of the present invention, there is provided an apparatus for producing an extrudate comprising an aerosol-generating material. The apparatus comprises an extruder. The extruder comprises an inlet and an outlet, wherein the inlet is adapted to receive a mixture and the outlet is adapted to extrude the mixture to form the extrudate. The outlet includes a die component. Said die component is adapted to form the extrudate comprising an aerosol-generating material. The die component is also adapted to provide the extrudate with a cross-sectional shape.

The extruder may be implemented to produce extrudate in the form of an object of a predetermined shape via extrusion. In particular, during extrusion, compressive and shear forces are exerted onto the mixture, in order to produce the extrudate. In particular, the extrudate is a continuous product with a length substantially larger than the dimensions defining its cross-sectional shape.

In particular, the inlet of the extruder is in fluid-connection with the outlet of the extruder, in order to enable the movement of the mixture from the inlet to the outlet. In particular, the movement path of the mixture from the inlet to the outlet defines an extrusion direction of the extruder. In particular, the inlet is located upstream of the outlet and the outlet is located downstream of the inlet.

The extruder may comprises a hopper adapted to provide the mixture to the inlet of the extruder.

The outlet of the extruder is adapted to extrude the mixture to form the extrudate. The extrudate exits the extruder at a downstream end of the outlet. In particular, once the mixture has entered the outlet, it may be considered the extrudate. The outlet, which may comprise multiple components and parts, includes at least one die component. The die component is adapted to form the extrudate and provide it with a cross-sectional shape. The extrudate may be formed by providing it with a defined geometric contour that includes a defined cross-sectional shape. The die component may be adapted so that the extrudate is provided with a gradient of cross-sectional shapes prior to achieving a final cross-sectional shape.

The die component may comprise multiple components, and in particular at least one die plate with at least one aperture. The aperture of the die plate may be adapted to provide the cross-sectional shape of the extrudate, and may therefore be adapted to define an outer profile of the extrudate. The geometric form of the aperture may be round and may manifest a circular or oval shape. The geometric form of the aperture may be at least partially or completely in the form of a spiral. Sidewalls of the die component may define the aperture. The sidewalls may exhibit corrugations.

The die plate may manifest multiple apertures and be so adapted that this plurality of apertures collectively form the extrudate and provide it with a cross-sectional shape. A die plate with a plurality of apertures in the form of an aperture group may be selected to form the cross-sectional shape of the extrudate as a hollow chamber profile. An aperture group may include at least one or several of a circular aperture, an oval apertures, and an at least a partially or completely spiral shaped aperture. An aperture group may be shaped like the inverse form of a wagon-wheel or the inverse form of at least two rings connected by at least one spoke.

An extrudate with a hollow chamber profile may have a cross-sectional shape with at least one area free of the extrudate. Said area may be considered a void, a cavity, or hollow chamber. Said hollow chamber extends along the length of the extrudate. A component may be present in said area

The die plate may exhibit multiple, namely at least two, aperture groups, to enable the simultaneous production of multiple extrudates. The aperture groups may have the same geometric configuration. The aperture groups may have a different configuration. The die plate may manifest at least one aperture and at least one aperture group, to enable the simultaneous manufacture of numerous extrudates.

The die component may comprises at least one mandrel that has at least one protrusion. The die plate and the mandrel may be arranged and adapted to one another, so that the extrudate is provided with a hollow chamber profile cross-sectional shape. The die plate and mandrel may be integrally formed or they may be at least two separate parts adapted to be fixed directly to or relative to one another. Such a fixation may be achieved by another component of the outlet, for example.

The geometric contour of the die plate, especially the aperture, may be adapted to accommodate the geometric contour of the mandrel, especially the protrusion. As such, the protrusion of the mandrel may be arranged to be at least partially inside the aperture of the die plate. The protrusion may extend through the aperture so that a downstream end surface of the protrusion is flush with a downstream end surface of the die plate. The downstream end surface of the protrusion may extend past the downstream end surface of the die plate.

In particular, the protrusion of the mandrel corresponds and is adapted to an aperture of the die plate. In this case, the aperture of the die plate is adapted to provide an outer profile of the cross-sectional shape of the extrudate, while the protrusion of the mandrel is adapted to provide the cross-sectional shape of the extrudate with an inner profile. The geometric form of the protrusion, especially the downstream end surface thereof, may be shaped in the form of a circle or at least partially, if not completely, in the form of a spiral. The protrusion may exhibit corrugations, and as such may be adapted to provide the inner profile of the cross-sectional shape of the hollow body profile of the extrudate with corrugations.

The protrusion may correspond and be adapted to at least one aperture of an aperture group or the entire aperture group.

In an embodiment where the die component exhibits multiple apertures and/or aperture groups for the simultaneous extrusion of multiple extrudates, the corresponding mandrel may manifest multiple protrusions. The amount of protrusions may equal the amount of apertures and/or aperture groups, however, not each aperture or aperture group must be associated with a protrusion.

In particular, the outlet may comprise a vibrating component. Said vibrating component may be adapted to apply vibrations to the die component during extrusion. Such vibrations may be ultrasonic in nature. The vibrations may improve the flow of the extrudate through the outlet. In particular, adhesion of the extrudate to the outlet may be reduced. A more precise cross-sectional shape may be obtained. Vibrating the die component may accelerate the movement of the mixture. Vibrating the die component may prevent the mixture from separating during extrusion. The vibrations may improve the extrusion efficiency and reduce waste and maintenance of the extruder.

The extruder may comprise at least one screw that is adapted to transport the mixture from the inlet to the outlet of the extruder, along the extrusion direction. In such a case, the extruder can be denoted as a screw extruder or a twin-screw extruder, if the extruder comprises two screws. In particular, a diameter of the screw increases along the extrusion direction. That is, the screw exhibits an increased diameter downstream the extrusion direction.

The extruder may comprise a heating zone, located upstream the extrusion direction and adapted to heat the mixture to a temperature between 90 degrees Celsius and 190 degrees Celsius, especially between 140 degrees Celsius and 190 degrees Celsius, most especially 175 degrees Celsius and 185 degrees Celsius.

The extruder may comprise a cooling zone, located downstream the extrusion direction, adapted to cool the mixture to a temperature between 30 degrees Celsius and 70 degrees Celsius, especially between 35 degrees Celsius and 50 degrees Celsius and most especially between 25 degrees Celsius and 35 degrees Celsius.

In particular, the outlet may comprise a cooling unit, adapted to cool at least a portion, if not the entirety, of the die component to a temperature between 10 degrees Celsius and 50 degrees Celsius, especially between 20 degrees Celsius and 40 degrees Celsius and most especially between 25 degrees Celsius and 35 degrees Celsius.

In particular, the apparatus may comprise a susceptor material feeding device that is adapted to insert susceptor material into the extrudate. The susceptor material feeding device may be adapted to insert the susceptor material into the extrudate downstream from the die component, especially downstream from the outlet. The susceptor material feeding device may be adapted to insert the susceptor material into the extrudate during extrusion in the outlet, especially in the die component.

Susceptor material is an inductively heatable material that includes but is not limited to any material that can be inductively heated to a temperature sufficient to generate an aerosol from an aerosol-generating material. Susceptor material may comprise at least one metal, such as technically or industrially pure iron or aluminum, but may comprise a metal alloy, such as ferromagnetic alloy, ferritic iron, ferromagnetic steel, ferromagnetic stainless steel, stainless steel, or an aluminum alloy. Susceptor material may be carbon-based, such as graphite. Susceptor material may be heated to a temperature in excess of 250 degrees Celsius.

In particular, the susceptor material is in the form of a continuous strip or rod and is provided on a bobbin. A strip may be considered a laminar element with a length substantially greater than a width and thickness thereof, while a rod may be considered a cylindrical element with a length substantially greater than a diameter thereof. The width of a susceptor material strip may be between 1 mm and 10 mm, while the thickness of a susceptor material strip may be between 1 mm and 10 mm. The width and thickness of a susceptor material strip may be equal, so that the cross-sectional shape of the susceptor material strip is a square. The diameter of a susceptor material rod may be between 1 mm and 10 mm. The rod may manifest an oval cross-sectional shape.

In particular, the susceptor material feeding device may comprise at least one guiding component, such as a pair of guiding rollers, to enable the transfer of the susceptor material from the bobbin to the extruder.

The apparatus may comprise a rotation device adapted to rotate the susceptor material. This may enable the extrudate to wrap around the susceptor material. The rotated susceptor material may have a winding shape in the extrudate. This may improve the heat distribution in the extrudate, when heating the susceptor material. The rotation of the susceptor material may improve the adhesion of the susceptor material to the extrudate, especially at the outlet of the extruder.

The apparatus may comprise at least one dryer adapted to dry the extrudate to substantially maintain its cross-sectional shape. The dryer is adapted to provide a drying temperature between 70 degrees Celsius and 110 degrees Celsius, especially between 80 degrees Celsius and 100 degrees Celsius and most especially between 85 degrees Celsius and 95 degrees Celsius. Such a dryer may be constructed as a continuous dryer, such as a tunnel dryer. Such a continuous dryer may exhibit at least two chambers or zones that are adapted to provide differing drying temperatures.

The apparatus may comprise at least one cutting device adapted to separate the extrudate into individual segments. The cutting device may be located directly downstream from the outlet. If the apparatus also comprises a dryer, for example, the cutting device may be located downstream thereof.

According to a second aspect of the present invention, there is provided a method for producing an extrudate comprising an aerosol-generating material, the method comprising the following steps: providing a mixture to an extruder via an inlet of the extruder, moving said mixture along an extrusion direction, extruding said mixture from the extruder via an outlet, wherein the mixture is extruded through a die component of the outlet of the extruder to form the extrudate comprising aerosol-generating material with a cross-sectional shape.

The mixture may comprise plant-based material, water, and an additional aerosol-former. The weight percent values and ranges for the constituents of the mixture, as provided herein, are based on the total weight of the mixture, according to the technically known definition of "weight percent", unless otherwise specified.

The mixture may be a slurry. The slurry may be a mixture of at least one denser solid suspended in at least one liquid.

In particular, the plant-based material is a material containing alkaloids.

The amount of material containing alkaloids or plant-based material in the mixture is between 30 weight percent and 80 weight percent, more especially between 40 weight percent and 70 weight percent.

A material containing alkaloids, which may be defined as a material containing at least one alkaloid, which alkaloid may comprise nicotine, such as that found in tobacco, for example.

Instead or in addition to tobacco, other plant-based materials may be part of the mixture. The herbaceous materials may be free of alkaloids.

Alkaloids are a group of naturally occurring chemical compounds that mostly contain basic nitrogen atoms. This group also includes some related compounds with neutral and even weakly acidic properties. Some synthetic compounds of similar structure are also termed alkaloids. In addition to carbon, hydrogen and nitrogen, alkaloids may contain oxygen, sulfur and, more rarely, other elements such as chlorine, bromine, and phosphorus.

Alkaloids are produced by a large variety of organisms including bacteria, fungi, plants, and animals. They can be purified from crude extracts of these organisms by acid-base extraction. Caffeine, nicotine, theobromine, atropine, tubocurarine are examples of alkaloids.

The material containing alkaloids may be tobacco leaves.

In particular, the material containing alkaloids is homogenized tobacco material, which is formed by agglomerating particulate tobacco containing at least the alkaloid nicotine. This homogenized tobacco material is typically manufactured from parts of the tobacco plant that are less suited for the production of cut filler, like tobacco stems, tobacco lamina or tobacco dust, for example. Typically, tobacco dust is created as a side product during the handling of the tobacco leaves during manufacture. The homogenized tobacco material may comprise a minor quantity of one or more of tobacco dust, tobacco fines, and other particulate tobacco by-products formed during the treating, handling and shipping of tobacco. The starting material for the production of homogenized tobacco material may be mostly tobacco leaves that have the same size and physical properties as the tobacco used for the blending of cut filler. The tobacco present in the homogenized tobacco material may constitute the majority of the tobacco, or even substantially the total amount of tobacco present in the aerosol-generating material.

The material containing alkaloids may contain starch. However, starch may be included into the mixture as a separate component.

Starch is a polymeric carbohydrate consisting of a large number of glucose units joined by glycosidic bonds. Starch is produced by most green plants as energy storage. It is the most common carbohydrate in human diets and is contained in plants like potatoes, wheat, maize (corn), rice, and tobacco. It consists of two types of polymeric molecules: the linear and helical amylose and the branched amylopectin, which arrange themselves in the plant in semi-crystalline granules.

In particular, the particles of the material containing alkaloids have a mean particle size between 0.02 millimeters and 0.3 millimeters. The mean particle size of between about 0.02 millimeters and about 0.3 millimeters represents the particle size at which the tobacco cells are at least in part destroyed. The use of a material containing alkaloids having such a mean size may advantageously lead to a smooth and uniform extrudate, in the downstream processing steps of the material containing alkaloids.

In particular, the water content of the mixture is between 5 weight percent and 70 weight percent or more and especially, between 10 weight percent and 18 weight percent or 25 weight percent and 60 weight percent and most especially between 11 weight percent and 14 weight percent or 35 weight percent and 50 weight percent.

In particular, the amount of aerosol-former in the mixture is between 1 weight percent and 10 weight percent, especially between 1 weight percent and 5 weight percent. In particular, an aerosol-former is an additional component in the mixture, to be considered separate from the material containing alkaloids, especially separate from tobacco.

Suitable aerosol-formers for the mixture are known in the art and include, but are not limited to: monohydric alcohols like menthol, polyhydric alcohols, such as triethylene glycol, 1,3-butanediol and glycerin; esters of polyhydric alcohols, such as glycerol mono-, di- or triacetate; and aliphatic esters of mono-, di- or polycarboxylic acids, such as dimethyl dodecanedioate and dimethyl tetradecanedioate.

Examples of preferred aerosol-formers are glycerin and propylene glycol.

The material containing alkaloids may have an aerosol-former content of greater than 3 weight percent of the total amount of material containing alkaloids. The material containing alkaloids may alternatively have an aerosol former content of between 3 weight percent and 30 weight percent. In particular, the aerosol-former is comprised between 7 weight percent to 25 weight percent of the material containing alkaloids. The aerosol-former is especially comprised between 10 weight percent to 25 weight percent of the material containing alkaloids. In particular, the aerosol-former content of the material containing alkaloids is an inherent constituent of the material containing alkaloids, and therefore, the amount thereof does not relate to the amount of aerosol-former that may be included in the mixture, as described above.

In particular, the mixture may comprise a binder. In particular, the amount of binder within the mixture is maximally 1 weight percent, however, it is possible to include between 1 weight percent and 15 weight percent, especially between 1 weight percent and 12 weight percent and most especially 1 weight percent and 5 weight percent.

The binder in the mixture may be any type of gum or pectin described herein. The binder may ensure that the particles of material containing alkaloids remain substantially dispersed throughout the mixture and the extrudate. For a descriptive review of gums which can be used as a binder, see Gums And Stabilizers For The Food Industry, IR.L Press (G.O. Phillip et al. eds. 1988); Whistler, Industrial Gums: Polysaccharides And Their Derivatives, Academic Press (2d ed. 1973); and Lawrence, Natural Gums For Edible Purposes, Noyes Data Corp. (1976).

Although any binder may be employed, preferred binders are natural pectins, such as fruit, citrus or tobacco pectins; guar gums, such as hydroxyethyl guar and hydroxypropyl guar; locust bean gums, such as hydroxyethyl and hydroxypropyl locust bean gum; alginate; starches, such as modified or derivitized starches; celluloses, such as methyl, ethyl, ethylhydroxymethyl and carboxymethyl cellulose; tamarind gum; dextran; pullalon; konjac flour; xanthan gum and the like. The particularly preferred binder for use in the present invention is guar.

In particular, the mixture may comprise a reducing sugar in an amount of between 2 weight percent and 30 weight percent, especially between 5 weight percent and 25 weight percent , even more especially between 10 weight percent and 15 weight percent and most especially between 11 weight percent and 14 weight percent.

In particular, the reducing sugar is glucose, fructose, xylose, ribose, or galactose, or may be a mixture thereof. The reducing sugar is in particular glucose, fructose or a mixture of the two.

The presence of reducing sugar in the mixture may modify the material containing alkaloids when mechanical energy is applied to the mixture. A reaction between the reducing sugar and the material containing alkaloids, particularly if ammonia or an ammonium containing compounds are contained in the latter, may occur. This reaction may modify the composition of the material containing alkaloids, so that the resulting mixture, and the aerosol-generating material, has a lower quantity of ammonia or ammonium containing compounds compared to aerosol-generating material formed from a mixture not containing reducing sugar. This may influence the properties and characteristics of the aerosol-generating material, in terms of flavor, for example.

In particular, the mixture may comprise cellulose fibers. Cellulose fibers are known to generally increase the tensile strength of the mixture and the resulting aerosol-generating material, thereby acting as a strengthening agent. Cellulose fibers for a mixture containing a material containing alkaloids such as homogenized tobacco material are known in the art and include, but are not limited to: soft-wood fibers, hard wood fibers, jute fibers, flax fibers, tobacco fibers and combination thereof. In particular, cellulose fibers such as wood fibers comprise a low lignin content. Alternatively, fibers, such as vegetable fibers, may be used either with the above fibers or with hemp and bamboo fibers. Cellulose fibers may include tobacco stem materials, stalks or other tobacco plant material.

The amount of cellulose fibers added to the mixture can be between 1 weight percent and 10 weight percent, especially between 1 weight percent and 7 weight percent and more especially between 1 weight percent and 5 weight percent. These values do not include the amount of cellulose fibers contained and associated with the material containing alkaloids, but are to be considered a separate constituent in the mixture.

The length of cellulose fibers is advantageously between 0.2 millimeters and 4 millimeters. In particular, the mean length per weight of the cellulose fibers is between 1 millimeter and 3 millimeters. In addition to pulping, the incorporated cellulose fibers may be subjected to suitable processes such as refining, mechanical pulping, chemical pulping, bleaching, sulphate pulping and a combination thereof.

The mixture may be formed and provided to the inlet of the extruder by any means known. In particular, the mixture is provided to a hopper fluidly-connected to the inlet of the extruder.

The mixture is moved along the extrusion direction, from the inlet of the extruder to the outlet of the extruder. In particular, this transportation is facilitated by the rotation of at least one screw within the extruder.

The incorporation of at least one screw in the extruder may facilitate the movement of the mixture along the extrusion direction. The screw but may modify the properties of the mixture along the extrusion direction. The rotation of the screw during extrusion imparts shear forces, that is mechanical work, on the mixture, which may increase mixing thereof and may induce chemical reactions between individual components of the mixture. The mechanical work may result in the generation of heat, which may influence the chemical and physical structure of the mixture and its individual components. Certain chemical reactions between the mixture and its individual components may be induced. The implementation of a screw may induce an incremental density increase along the extrusion direction. That is, the mixture may exhibit a higher density downstream the extrusion direction and a lower density upstream the extrusion direction. The rotation of the screw may have a de-hydrating effect on the mixture, especially along the extrusion direction. That is, the water content of the mixture may be reduced during movement along the extrusion direction.

In particular, the screw is rotated at rotational speeds between 20 rotations per minute and 40 rotations per minute, 40 rotations per minute and 80 rotations per minute, or 60 rotations per minute and 120 rotations per minute.

The amount of mechanical energy provided to the mixture in the extruder is particularly at least 20 watt-hour per kilogram of the mixture.

The mixture is extruded from the die component of the outlet to form an extrudate comprising an aerosol-generating material with a cross-sectional shape.

An aerosol-generating material denotes a material that is capable of releasing an aerosol containing volatile compounds, such as nicotine, as a result of a heating process. The aerosol-generating material primarily corresponds to the mixture provided in the inlet of the extruder, yet particularly exhibits at least a different composition, different chemical properties, or different physical properties than the mixture. For example, the aerosol-generating material may be denser than the provided mixture, may have a higher viscosity than the provided mixture, may have less water content than the provided mixture, may have a higher content of glycerin, guar or cellulose fibers than the provided mixture or may have less ammonia or ammonium containing compounds than the provided mixture. The aerosol-generating material may exhibit a combination of any one of the above-listed properties. These differences may be a result of the movement of the mixture through the extruder and along the extrusion direction. Additionally, the addition of providing mechanical work to the mixture, for example via the rotation of a screw, or varying the temperature thereof by heating or cooling certain sections of the extruders may result in a variation in at least the composition, chemical properties, or physical properties of the aerosol-generating material, in comparison to the provided mixture.

In particular, the cross-sectional shape of the extrudate is round, especially circular or oval. The diameter of the cross-sectional shape of the extrudate may be between 5 mm and 10 mm.

By extruding the mixture through the die component of the outlet of the extruder to form the extrudate comprising aerosol-generating material with a cross-sectional shape, the aerosol-generating material may be produced within a singular manufacturing step. This negates the necessity of producing a sheet or cast leaf, winding it on a bobbin, transporting said bobbin, and unwinding the sheet for further processing to produce a cylindrical aerosol-generating material. This may reduce production effort and the corresponding production time in addition to costs associated with such a production line.

In particular, the cross-sectional shape of the extrudate is a hollow chamber profile, wherein at least one area of the cross-sectional shape of the extrudate is free of the aerosol-generating material. Such an area may be considered a cavity, a void, or a hollow chamber, for example. In particular, the area free of aerosol-generating material, that is the hollow chamber, extends along the length of the extrudate, especially along the entire length of the extrudate. Such an extension may form a flow channel in the extrudate. If the hollow chamber profile exhibits multiple hollow chambers, each hollow chamber may form a flow channel in the extrudate, so that the extrudate exhibits a plurality of flow channels.

Flow channels within the extrudate directly relate to the airflow properties of the aerosol-generating material, during use thereof in the aerosol-generating article. The flow channels may be adapted to enhance the release of substances from the aerosol-generating material. The flow channels may be adapted to adjust a "resistance to draw" (RTD) property of the aerosol-generating material. A low resistance to draw may reduce the perceived temperature of the generated aerosol to a level considered acceptable by the user.

Additionally, by producing at least one flow channel during extrusion of the extrudate, additional processing steps, such as crimping, may be avoided. This may reduce the complexity of the production line with respect to required machinery and reduce production time. Negative aspects of crimping, such as damage to the homogenized tobacco sheet or cast leaf and increased shredding and tearing thereof, may be prevented.

The hollow chamber profile may manifest varying geometric shapes and contours. The hollow chamber profile may have at least one hollow chamber that is round, in particular circular or oval. The hollow chamber profile may have more than two hollow chambers. If the hollow chamber profile manifests multiple hollow chambers, the geometric shape of each hollow chamber may be identical. The geometric shape of each hollow chamber, if the hollow chamber profile manifests multiple hollow chambers, may exhibit divergent contours. The hollow chamber profile may be at least partially in the form of at least one spiral. The hollow chamber profile may be at least partially in the form of at least two rings connected by at least one spoke. The hollow chamber profile may be in the form of a wagon wheel. The hollow chamber profile may be any combination of any of the above mentioned forms. At least one of the surfaces defining the hollow chamber profile may manifests corrugations.

In particular, the extrudate has a length between 2 meters and 10 meters.

In particular, the method may comprise a step of inserting a susceptor material into the cross-sectional shape of the extrudate comprising aerosol-generating material, during extrusion of the extrudate comprising aerosol-generating material. The susceptor material may be inserted through the outlet, especially the die component.

By combining the insertion of the susceptor material step with the extrusion of the extrudate comprising aerosol-generating material, the reduction of individual production steps and associated time and costs, may be minimized.

In particular, the method may comprise a step of inserting a susceptor material into the cross-sectional shape of the extrudate comprising aerosol-generating material, subsequent to the extrusion of the extrudate comprising aerosol-generating material.

Coupling the insertion of the susceptor material to the extrusion of the of the extrudate comprising aerosol-generating material, may enable a continuous production process without the necessity of individualized steps associated with batch processing.

In particular, the susceptor material is inserted into a center of the cross-sectional shape of the extrudate. In particular, the susceptor material is inserted into a hollow chamber of the cross-sectional shape of the extrudate. In particular, the susceptor material is inserted into a hollow chamber located in a center of the cross-sectional shape. The susceptor material may fill the corresponding hollow chamber into which it is inserted.

In particular, the susceptor material is inserted into the extrudate comprising aerosol-generating material at a pressure, that is an insertion force, between 2 bar and 6 bar.

In particular, the susceptor material is rotated during insertion into the cross-sectional shape of the extrudate. The susceptor material may be rotated between 20 rotations per minute and 150 rotations per minute.

The rotation of the susceptor material during insertion into the extrudate may prevent adhesion to the aerosol-generating material, reducing required insertion forces. This rotation of the susceptor may lead to a winding susceptor shape. This may improve the heat distribution in the extrudate, when heating the susceptor material. The rotation of the susceptor material may improve the adhesion of the susceptor material to the extrudate, especially at the outlet of the extruder . The rotation of the susceptor material may be achieved by a tube or flute adapted to convey material around susceptor material to allow for the rotation of the susceptor material.

In particular, the method may comprise a step of maintaining the outlet of the extruder, especially the die component, at a temperature between 10 degrees Celsius and 50 degrees Celsius, especially between 20 degrees Celsius and 40 degrees Celsius and most espeically between 25 degrees Celsius and 35 degrees Celsius.

Maintaining the outlet temperature within an above-stated range may further stabilize the structural properties of the cross-sectional shape of the extrudate, to ensure that it can be maintained post-extrusion, that is after exiting the outlet. This may be due to a further reduction in water content of the extrudate, for example.

In particular, the outlet applies vibrations to the extrudate during extrusion. Applying vibrations, especially to the die component during extrusion may influence the required forming force and reduce adhesion of the extrudate to the inner walls of the die component.

In particular, the method may comprise drying the extrudate to substantially maintain its cross-sectional shape. The dryer is adapted to provide a drying temperature between 70 degrees Celsius and **110** degrees Celsius, especially between 80 degrees Celsius and 100 degrees Celsius and most especially between 85 degrees Celsius and 95 degrees Celsius.

Drying the extrudate may further reduce the water content of the extrudate, consequently stabilizing the structural integrity of its cross-sectional shape. If the cross-sectional shape of the extrudate manifests a hollow chamber profile, such a reduction in water content may prevent a hollow chamber from collapsing, partially or completely, thereby maintaining the established flow channels in the extrudate.

A substantially maintained cross-sectional shape is one that reflects the cross-sectional shape of the extrudate directly after extrusion, that is after exiting the extruder. If the cross-sectional shape of the extrudate is a hollow chamber profile, a substantially maintained cross-sectional shape is one wherein the at least one hollow chamber is not entirely collapsed. The hollow chamber may manifest slight deviations from the contour associated with the hollow chamber directly after exiting the extruder.

In particular, the method may comprise cutting the extrudate comprising aerosol-generating material into segments with a length between 3 millimeters and 10 millimeters. In particular, the apparatus may comprise at least one cutting device adapted to separate the extrudate into individual sections.

According to a third aspect of the present invention, there is provided a use of an extruder for extruding an extrudate comprising an aerosol-generating material, such that the extrudate is provided with a cross-sectional shape.

According to a fourth aspect of the present invention, there is provided a method for producing an aerosol-generating material encompassing a susceptor material, the method comprising the following steps: providing a length of aerosol-generating material with a spiral cross-sectional shape, providing the susceptor material via a susceptor material feeding device to a center of the spiral cross-sectional shape of the aerosol-generating material, rotating the susceptor material via a rotation device, pressing the susceptor material into the center of the cross-sectional shape of the aerosol-generating material, and unwinding the aerosol-generating material around the susceptor material.

A length of aerosol-generating material with a spiral cross-sectional shape may be provided via extrusion, especially via the extrusion of an extrudate comprising an aerosol-generating material, wherein a cross-sectional shape of the extrudate is a hollow chamber profile shaped like a spiral. The length of aerosol-generating material with a spiral cross-sectional shape may be provided by rolling a sheet of aerosol generating material.

The susceptor material is rotated and pressed into the center of the spiral cross-sectional shape of the aerosol-generating material. Due to the rotational movement of the susceptor material, in additional to the forward movement associated with the pressing movement of the susceptor material, the aerosol-generating material unwinds from its spiral cross-sectional shape to wrap around the susceptor material. That is, the aerosol-generating material unwinds and wraps around the susceptor material layer for layer.

In particular, the length of aerosol-generating material with a spiral cross-sectional shape is between 80 millimeters and 150 millimeters.

In particular, a diameter of the spiral cross-sectional shape is between 5 millimeters and 8 millimeters.

In particular, the susceptor material is pressed into the center of the aerosol-generating material at a pressure between 2 bar and 6 bar.

In particular, the susceptor material is rotated during insertion into the cross-sectional shape of the extrudate. In particular, the susceptor material is rotated between 20 rotations per minute and 150 rotations per minute.

Both the rotational speed of the susceptor material, as well as the pressing force thereof, can influence how much the aerosol-generating material overlaps its self during unwinding around the susceptor material. This may ultimately effect the overall thickness of the end product, that is the aerosol-generating material encompassing a susceptor material. In particular, such a thickness is between 0.20 millimeters and 0.75 millimeters.

A winding angle of the aerosol-generating material may be in between 2 degrees to 15 degrees, especially between 4 degrees to 8 degrees, and in one embodiment 6 degrees, 17 minutes (6°17'). In particular, the winding angle is the angle formed by the aerosol-generating material with respect to a circumference of the susceptor material. That is, a winding angle of 0 degrees refers to the unwinding of the aerosol-generating material along a defined circumference of the susceptor material. In such a case, the aerosol-generating material would be wound at said point of the susceptor without covering the length of the susceptor material. The winding angle enables the length of the susceptor material to be covered with aerosol-generating material during winding. The winding angle may influence the thickness or coverage of the susceptor material with aerosol-generating material. Such an winding angle may improve the tension of the aerosol-generating material during unwinding, preventing breakage or uneven overlapping thereof.

The apparatus of the first aspect may be operated according to the method of the second aspect or fourth aspect or used according to the third aspect. The method of the second aspect or fourth aspect may involve the apparatus of the first aspect.

The invention is defined in the claims. However, below there is provided a non-exhaustive list of non-limiting examples. Any one or more of the features of these examples may be combined with any one or more features of another example, embodiment, or aspect described herein.

Example Ex1: Apparatus for producing an extrudate comprising an aerosol-generating material, the apparatus comprising
an extruder,
wherein the extruder comprises an inlet and an outlet,
wherein the inlet is adapted to receive a mixture,
wherein the outlet is adapted to extrude the mixture to form the extrudate,
wherein the outlet includes a die component,
wherein the die component is adapted to form an extrudate comprising an aerosol-generating material, and
wherein the die component is adapted to provide the extrudate with a cross-sectional shape.

Example Ex2: Apparatus according to Ex1, wherein the die component comprises a die plate and a mandrel,
wherein the die plate manifests at least one aperture,
wherein the mandrel manifest at least one protrusion, and
wherein the protrusion is arranged at least partially inside the aperture.

Example Ex3: Apparatus according to Ex2, wherein the die plate and the mandrel are adapted to form the extrudate, so that the cross-sectional shape of the extrudate is a hollow chamber profile.

Example Ex4: Apparatus according to Ex2 or Ex3, wherein a downstream end surface of the protrusion is shaped at least partially in the form of a spiral.

Example Ex5: Apparatus according to any one of Ex2 to Ex4, wherein the mandrel and die plate are integrally formed.

Example Ex6: Apparatus according to any one of Ex2 to Ex4, wherein the mandrel and die plate are two separate parts that are adapted to be fixed to each other or fixed relative to one another.

Example Ex7: Apparatus according to any one of Ex2 to Ex6, wherein the protrusion extends through the aperture to a downstream end surface of the die plate.

Example Ex8: Apparatus according to any one of Ex2 to Ex7, wherein a downstream end surface of the protrusion is shaped in the form of a circle.

Example Ex9: Apparatus according to any one of Ex2 to Ex8, wherein the protrusion has corrugations.

Example Ex10: Apparatus according to any one of Ex1 to Ex9, wherein the extruder comprises a screw, which is adapted to move the mixture from the inlet to the outlet of the extruder along an extrusion direction.

Example Ex11: Apparatus according to any one of Ex1 to Ex10, wherein the extruder comprises a screw, which exhibits an increased diameter downstream an extrusion direction.

Example Ex12: Apparatus according to any Ex1 to Ex11, wherein the outlet includes a vibrating component.

Example Ex13: Apparatus according to any one of Ex1 to Ex12, wherein the extruder further comprises a heating zone upstream an extrusion direction, adapted to heat the mixture to a temperature between 90 degrees Celsius and 190 degrees Celsius, preferably between 140 degrees Celsius and 190 degrees Celsius, most preferably 175 degrees Celsius and 185 degrees Celsius.

Example Ex14: Apparatus according to any one of Ex1 to Ex13, wherein the extruder further comprises a cooling zone downstream the extrusion direction, adapted to cool the mixture to a temperature between 30 degrees Celsius and 70 degrees Celsius, preferably between 35 degrees Celsius and 50 degrees Celsius and most preferably between 25 degrees Celsius and 35 degrees Celsius.

Example Ex15: Apparatus according to any one of Ex1 to Ex14, wherein the apparatus further comprises
a susceptor material feeding device,
wherein the susceptor material feeding device is adapted to insert susceptor material into the extrudate.

Example Ex16: Apparatus according to Ex15, wherein the susceptor material feeding device is adapted to insert susceptor material into the extrudate downstream from the die component.

Example Ex17: Apparatus according to Ex15, wherein the susceptor material feeding device is adapted to insert susceptor material into the extrudate during extrusion in the outlet.

Example Ex18: Apparatus according to any one of Ex1 to Ex17, wherein the apparatus further comprises a rotation device adapted to rotate the susceptor material.

Example Ex19: Apparatus according to any one of Ex1 to Ex18, wherein the apparatus further comprises a dryer adapted to dry the extrudate comprising an aerosol-generating material to substantially maintain its cross-sectional shape.

Example Ex20: Apparatus according to any one of Ex1 to Ex19, wherein the mixture is a slurry.

Example Ex21: Apparatus according to any one of Ex1 to Ex20, wherein the extrudate is tobacco cast leaf.

Example Ex22: Method for producing an extrudate comprising an aerosol-generating material, the method comprising the following steps:
providing a mixture to an extruder via an inlet of the extruder,
moving said mixture along an extrusion direction,
extruding said mixture from the extruder via an outlet,
wherein the mixture is extruded through a die component of the outlet of the extruder to form the extrudate comprising aerosol-generating material with a cross-sectional shape.

Example Ex23: Method according to Ex22, wherein the density of the mixture is increased while is it moved along an extrusion direction.

Example Ex24: Method according to Ex22 or Ex23, wherein the water content of the mixture is reduced during movement along the extrusion direction.

Example Ex25: Method according to any one of Ex22 to Ex24, wherein the extrudate comprising an aerosol-generating material has a circular cross-section with a diameter between 5 millimeters and 10 millimeters.

Example Ex26: Method according to any one of Ex22 to Ex25, wherein the cross-sectional shape of the extrudate is a hollow chamber profile.

Example Ex27: Method according to Ex26, wherein the hollow chamber profile forms a flow channel in the extrudate.

Example Ex28: Method according to Ex26 or Ex27, wherein the hollow chamber profile has at least one hollow chamber that is circular.

Example Ex29: Method according to Ex26 or Ex27, wherein the hollow chamber profile is at least partially in the form of at least one spiral.

Example Ex30: Method according to Ex26 or Ex27, wherein the hollow chamber profile is at least partially in the form of at least two rings connected by at least one spoke.

Example Ex31: Method according to any one of Ex26 to Ex30, wherein at least one surface of the hollow chamber profile manifests corrugations.

Example Ex32: Method according to any one of Ex22 to Ex31, wherein the extrudate has a length between 2 meters and 10 meters.

Example Ex33: Method according to any one of Ex22 to Ex32, further comprising a step of inserting a susceptor material into the cross-sectional shape of the extrudate comprising aerosol-generating material, during extrusion of the extrudate comprising aerosol-generating material from the die component.

Example Ex34: Method according to any one of Ex22 to Ex32, further comprising a step of inserting a susceptor material into the cross-sectional shape of the extrudate comprising aerosol-generating material, subsequent to the extrusion of the extrudate comprising aerosol-generating material.

Example Ex35: Method according to any one of Ex22 to Ex34, wherein the die component is maintained at a temperature between 20 degrees Celsius and 40 degrees Celsius.

Example Ex36: Method according to any one of Ex22 to Ex35, wherein the extrudate is dried at a temperature between 80 degrees Celsius and 100 degrees Celsius.

Example Ex37: Method according to any one of Ex22 to Ex36, further comprising a step of separating the aerosol-generating material extrudate into segments with a length of 3 millimeters to 10 millimeters.

Example Ex38: Method according to any one of Ex22 to Ex37, wherein the mixture is a slurry.

Example Ex39: Method according to any one of Ex22 to Ex38, wherein the extrudate is tobacco cast leaf.

Example Ex40: Use of an extruder for extruding an extrudate comprising an aerosol-generating material, such that the extrudate is provided with a cross-sectional shape.

Example Ex41: Method for producing aerosol-generating material encompassing a susceptor material, the method comprising the following steps:
Providing a length of aerosol-generating material with a spiral cross-sectional shape,
Providing the susceptor material via a susceptor material feeding device to a center of the spiral cross-sectional shape of the aerosol-generating material,
Rotating the susceptor material via a rotation device,
Pressing the susceptor material into the center of the cross-sectional shape of the aerosol-generating material, and
Unwinding the aerosol-generating material around the susceptor material.

Example Ex42: Method according to Ex41, wherein the length of aerosol-generating material with a spiral cross-sectional shape is provided by extrusion.

Example Ex43: Method according to Ex41, wherein the length of aerosol-generating material with a spiral cross-sectional shape is provided by rolling a sheet of aerosol-generating material.

Example Ex44: Method according to any one of Ex41 to Ex43, wherein the susceptor material is pressed into the center of the aerosol-generating material at a pressure between 2 bar and 6 bar.

Example Ex45: Method according to any one of Ex41 to Ex44, wherein the susceptor material is rotated between 20 rotations per minute and 150 rotations per minute.

Example Ex46: Aerosol-generating material produced according to the method in any one of Ex22 to Ex39.

Example Ex47: Aerosol-generating article comprising an aerosol-generating material produced according to any one of any one of Ex22 to Ex39.

Example Ex48: System comprising an apparatus according to any one of Ex1 to Ex21 and a mixture for forming an extrudate comprising an aerosol-generating material.

Example Ex49: Extrudate comprising aerosol-generating material with a cross-sectional shape.

Example Ex50: Extrudate according to Ex49, wherein the extrudate has a circular cross-section with a diameter between 5 millimeters and 10 millimeters.

Example Ex51: Extrudate according to Ex49 or Ex50, wherein the cross-sectional shape of the extrudate is a hollow chamber profile.

Example Ex52: Extrudate according to Ex51, wherein the hollow chamber profile forms a flow channel in the extrudate.

Example Ex53: Extrudate according to Ex51, wherein the hollow chamber profile exhibits multiple hollow chambers, wherein each hollow chamber forms a flow channel in the extrudate, so that the extrudate exhibits a plurality of flow channels.

Example Ex54: Extrudate according to Ex51 or Ex52, wherein the hollow chamber profile manifests multiple hollow chambers surrounded by aerosol-generating material.

Example Ex55: Extrudate according to Ex51 or Ex52, wherein the hollow chamber profile has at least one hollow chamber that is round, in particular circular or oval.

Example Ex56: Extrudate according to any one of Ex51 to Ex55, wherein the hollow chamber profile has more than two hollow chambers, wherein the geometry of each hollow chamber may be identical.

Example Ex57: Extrudate according to any one of Ex51 to Ex56, wherein the hollow chamber profile has more than two hollow chambers, wherein the geometry of each hollow chamber may exhibit divergent contours.

Example Ex58: Extrudate according to any one of Ex51 to Ex57, wherein the hollow chamber profile has more than two hollow chambers, wherein the geometry of each hollow chamber may exhibit divergent contours.

Example Ex59: Extrudate according to any one of Ex51 to Ex58, wherein the hollow chamber profile is at least partially in the form of at least one spiral.

Example Ex60: Extrudate according to any one of Ex51 to Ex58, Wherein the hollow chamber profile is shaped like a double spiral.

Example Ex61: Extrudate according to any one of Ex51 to Ex58, wherein the hollow chamber profile is at least partially in the form of at least two rings connected by at least one spoke.

Example Ex62: Extrudate according to any one of Ex51 to Ex58, wherein the hollow chamber profile exhibits multiple concentric rings connected by multiple spokes, both comprising aerosol-generating material.

Example Ex63: Extrudate according to any one of Ex51 to Ex58, wherein the hollow chamber profile is in the form of a wagon wheel.

Example Ex64: Extrudate according to of Ex63, wherein the form of a wagon-wheel has spokes manifesting corrugated surfaces.

Example Ex65: Extrudate according to any one of Ex51 to Ex58, manifesting a hollow chamber profile with multiple rings and connecting spokes.

Example Ex66: Extrudate according to any one of Ex51 to Ex58, wherein at least one of the surfaces defining the hollow chamber profile manifests corrugations.

Example Ex67: Extrudate according to any one of Ex51 to Ex66, wherein a hollow chamber extends along the length of the extrudate.

Example Ex68: Extrudate according to any one of Ex51 to Ex67, wherein a hollow chamber is an area free of the extrudate, wherein a component is present in said area.

Example Ex69: Extrudate according to any one of Ex49 to Ex67, comprising inserted susceptor material.

Example Ex70: Extrudate according to Ex69, wherein the susceptor material comprises at least one metal, such as technically or industrially pure iron or aluminum, or comprises a metal alloy, such as ferromagnetic alloy, ferritic iron, ferromagnetic steel, ferromagnetic stainless steel, stainless steel, or an aluminum alloy, or the susceptor material is carbon-based, such as graphite.

Example Ex71: Extrudate according to any one of Ex49 to Ex70, wherein the extrudate is formed from a mixture comprising plant-based material in the form of material containing at least one alkaloid, water, and an additional aerosol-former.

Example Ex72: Extrudate according to Ex71, wherein the alkaloid may comprise nicotine.

Example Ex73: Extrudate according to Ex71 or Ex72, wherein tobacco may be part of the mixture.

Example Ex74: Extrudate according to any one of Ex71 to Ex73, wherein the material containing at least one alkaloid may be tobacco leaves.

Example Ex75: Extrudate according to any one of Ex71 to Ex74, wherein the amount of material containing at least one alkaloid or plant-based material in the mixture is between 30 weight percent and 80 weight percent, more especially between 40 weight percent and 70 weight percent.

Example Ex76: Extrudate according to any one of Ex71 to Ex75, wherein the material containing at least one alkaloid is homogenized tobacco material, which is formed by agglomerating particulate tobacco containing at least the alkaloid nicotine

Example Ex77: Extrudate according to any one of Ex71 to Ex76, wherein the material containing at least one alkaloid contains starch.

Example Ex78: Extrudate according to Ex77, wherein starch is included into the mixture as a separate component from the material containing at least one alkaloid.

Example Ex79: Extrudate according to any one of Ex71 to Ex75, wherein the particles of the material containing at least one alkaloid have a mean particle size between 0.02 millimeters and 0.3 millimeters.

Example Ex80: Extrudate according to any one of Ex71 to Ex79, wherein the material containing at least one alkaloid has an aerosol-former content of greater than 3 weight percent of the total amount of material containing at least one alkaloid, in particular an aerosol former content of between 3 weight percent and 30 weight percent, more in particular the aerosol-former is comprised between 7 weight percent to 25 weight percent of the material containing alkaloids.

Example Ex81: Extrudate according to any one of Ex71 to Ex79, wherein an aerosol-former is an additional component in the mixture, to be considered separate from the material containing at least one alkaloid.

Example Ex82: Extrudate according to Ex80 or Ex81, wherein the aerosol-former is comprised between 10 weight percent to 25 weight percent of the material containing at least one alkaloid.

Example Ex83: Extrudate according to any one of Ex80 to Ex82, wherein the aerosol-former is glycerin or propylene glycol.

Example Ex84: Extrudate according to any one of Ex80 to Ex82, wherein the aerosol-former is a monohydric alcohol like menthol, polyhydric alcohol, such as triethylene glycol, 1,3- 8 butanediol and glycerin; ester of polyhydric alcohols, such as glycerol mono-, di- or triacetate; or aliphatic ester of mono-, di- or polycarboxylic acids, such as dimethyl dodecanedioate and dimethyl tetradecanedioate.

Example Ex85: Extrudate according to any one of Ex71 to Ex84, wherein the binder is one of
- a natural pectin, such as fruit, citrus or tobacco pectin;
- a guar gum, such as hydroxyethyl guar and hydroxypropyl guar;
- a locust bean gums, such as hydroxyethyl and hydroxypropyl locust bean gum;
- an alginate;
- a starche, such as modified or derivitized starches;
- a cellulose, such as methyl, ethyl, ethylhydroxymethyl and carboxymethyl cellulose;
- a tamarind gum;
- a dextran;
- a pullalon;
- a konjac flour;
- a xanthan gum.

Example Ex86: Extrudate according to any one of Ex71 to Ex84, wherein the binder is guar.

Example Ex87: Extrudate according to any one of Ex71 to Ex86, wherein the mixture comprises a reducing sugar in an amount of between 2 weight percent and 30 weight percent, especially between 5 weight percent and 25 weight percent , even more especially between 10 weight percent and 15 weight percent and most especially between **11** weight percent and 14 weight percent.

Example Ex88: Extrudate according to Ex87, wherein the reducing sugar is glucose, fructose or a mixture of the two.

Example Ex89: Extrudate according to Ex87, wherein the reducing sugar is glucose, fructose, xylose, ribose, or galactose, or a mixture thereof.

Example Ex90: Extrudate according to any one of Ex71 to Ex89, wherein the mixture comprises cellulose fibers , in particular tobacco stem materials, stalks or other tobacco plant material, or soft-wood fibers, hard wood fibers, jute fibers, flax fibers, tobacco fibers and combination thereof.

Example Ex91: Extrudate according to any one of Ex71 to Ex90, wherein the mixture comprises vegetable fibers, in particular used either with the cellulose fibers or with hemp and bamboo fibers.

Example Ex92: Extrudate according to Ex90 or Ex91, wherein the amount of cellulose fibers added to the mixture as separate constituent and not included in the amount of cellulose fibers contained and associated with the material containing alkaloids, is between 1 weight percent and 10 weight percent, especially between 1 weight percent and 7 weight percent and more especially 20 between 1 weight percent and 5 weight percent.

Example Ex93: Extrudate according to any one of Ex71 to Ex92, wherein the length of the cellulose fibers is between 0.2 millimeters and 4 millimeters, in particular, the mean length per weight of the cellulose fibers is between 1 millimeter and 3 millimeters.

Example Ex94: Extrudate according to any one of Ex71 to Ex93, wherein the cellulose fibers were subjected to refining, mechanical pulping, chemical pulping, bleaching, sulphate pulping or a combination thereof.

Example Ex95: Extrudate segments formed by cutting the extrudate according to Ex49 to Ex94 into segments with a length between 3 millimeters and 10 millimeters.

Example Ex96: Aerosol-generating article having flow channels within an extrudate according to any of the previous claims directly relating to the airflow properties of the aerosol-generating material.

Examples of embodiments of the invention will now be further described with reference to the figures in which:
Figure 1 illustrates a cross-sectional view of an extruder;
Figure 2 illustrates a perspective view of a die component;
Figure 3 illustrates a cross-section view of an extrudate, wherein the extrudate manifests a hollow chamber profile with multiple circular hollow chambers;
Figure 4 illustrates a cross-section view of an extrudate, wherein the extrudate manifests a hollow chamber profile with multiple rings and connecting spokes;
Figure 5 illustrates a cross-section view of an extrudate, wherein the extrudate manifests a hollow chamber profile shaped like a wagon-wheel, wherein the spoked of the wagon wheels manifest corrugations;
Figure 6 illustrates a cross-section view of an extrudate, wherein the extrudate manifests a hollow chamber shaped like a spiral;
Figure 7 illustrates a cross-section view of an extrudate, wherein the extrudate manifests a hollow chamber profile shaped like a double spiral;
Figure 8 illustrates a perspective view of an extrudate exiting the outlet of the extruder, wherein extrudate manifests a hollow chamber profile shaped like a spiral;
Figure 9 illustrates a cross-sectional view of an extruder, wherein a susceptor material is inserted into an extrudate during extrusion thereof;
Figure 10 illustrates a cross-sectional view of an extruder, wherein a susceptor material is inserted into an extrudate after extrusion thereof;
Figure 11 illustrates a cross-sectional view of an extruder with a dryer and a cutting device;
Figure 12 illustrates a perspective view of a method for unwinding an aerosol-generating material around a susceptor material.

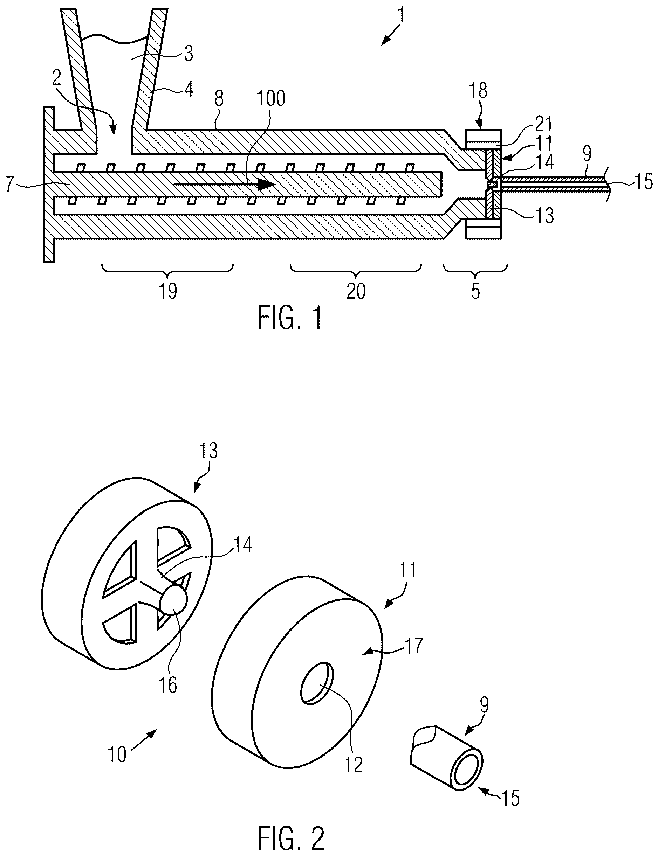

An extruder 1, as depicted in Figure 1, manifests an inlet 2, which is adapted to receive a mixture 3 provided from a hopper 4. The inlet 2 is in fluid-connection with an outlet 5 of the extruder 1, in order to enable the mixture 3 to be transported from the inlet 2 to the outlet 5 along an extrusion direction 100. The extrusion direction 100 is further indicated by an arrow in Figure 1. The extruder 1 further comprises a screw 7 located within a barrel 8 of the extruder 1. The rotation of the screw 7 facilitates the movement of the mixture 3 towards the outlet 5. The outlet 5 of the extruder 1 is adapted to extrudate the mixture 3 to form an extrudate 9 with a cross-sectional shape vie the implementation of a die component 10.

As further illustrated in Figure 2, the die component 10 includes a die plate 11 with an aperture 12 and a mandrel 13 with a protrusion 14. The die plate 11 and the mandrel 13 are arranged and adapted to one another, so that the extrudate 9 is provided with a circular hollow chamber profile 15 cross-sectional shape. Furthermore, the geometric contour of the aperture 12 is adapted to accommodate the geometric contour of the protrusion 14, so that when assembled in the outlet 5, the protrusion 14 is arranged within the aperture 12 a downstream end surface 16 of the protrusion 14 is flush with a downstream end surface 17 of the die plate 11.

The outlet 5 manifests a vibrating component 18 to apply vibrations to the die component 10 during extrusion of the extrudate 9, in addition to a cooling unit 21, which is adapted to cool the die component 10.

The extruder 1 also comprises a heating zone 19 and a cooling zone 20.

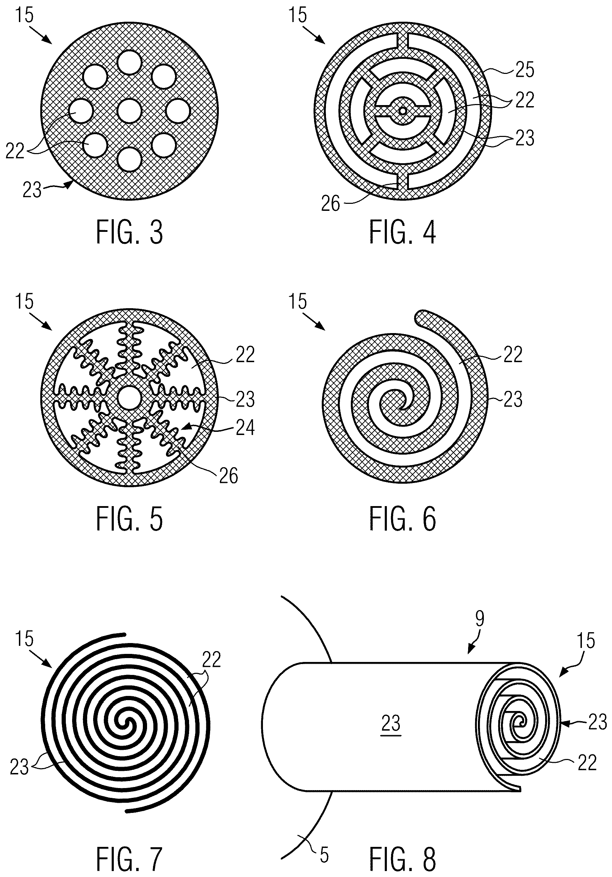

The hollow chamber profile 15 of the extrudate 9 can exhibit a large variance in geometric design, as exemplified in Figures 3 to 7. For example, the hollow chamber profile 15 may manifest multiple hollow chambers 22 surrounded by aerosol-generating material 23, such as that shown in Figure 3, or may exhibit multiple concentric rings 25 connected by multiple spokes 26, both comprising aerosol-generating material 23, as illustrated in Figure 4. The hollow chamber profile 15 may also be shaped in the form of a wagon-wheel with spokes 26 manifesting corrugated surfaces 24, in the shape of a spiral, or even in the shape of a double spiral, as given in Figures 5, 6, and 7 respectively. Figure 8 provides a perspective of the extrudate 9 with a spiral hollow chamber profile 15 being extruded from the outlet 5.

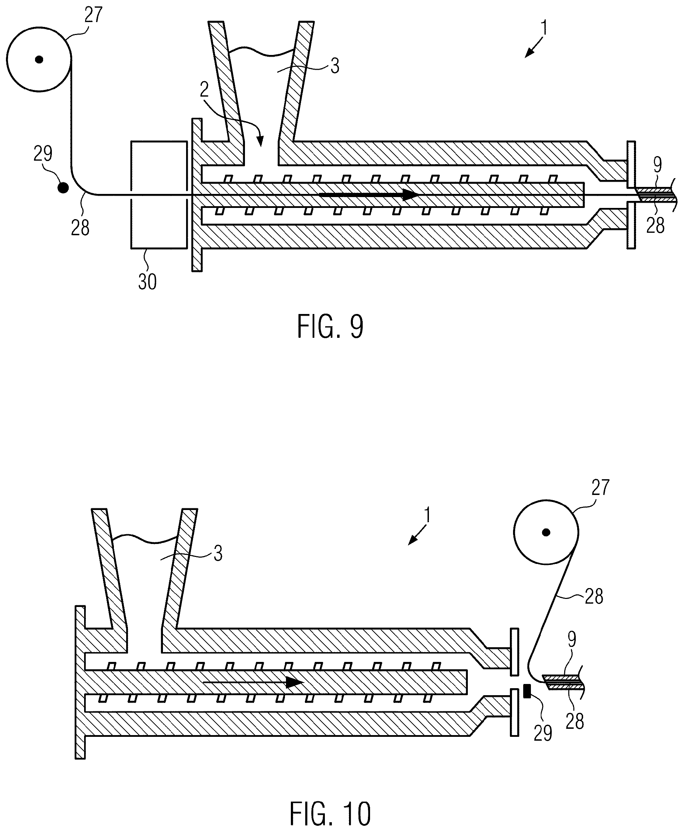

Figures 9 and 10 depict an apparatus for producing an extrudate 9 comprising an aerosol-generating material 23 comprising a susceptor material feeding device 27 adapted to insert susceptor material 28 into the extrudate 9. According to the embodiment illustrated in Figure 9, the susceptor material 28 is fed through the screw 7 of the extruder 1, along the extrusion direction 100, so that the susceptor material 28 can be inserted into the extrudate 9 during extrusion in the outlet 5. In another embodiment shown in Figure 10, susceptor material 28 is guided from the susceptor material feeding device 27 to the extrudate 9, so that the susceptor material 28 is inserted into said extrudate 9 subsequent to extrusion from the outlet 5. In both embodiments, the susceptor material 28 is guided to the extrudate 9 with the help of specifically placed guiding rollers 29.

The apparatus illustrated in Figure 9 further comprises a rotation device 30 adapted to rotate the susceptor material 28.

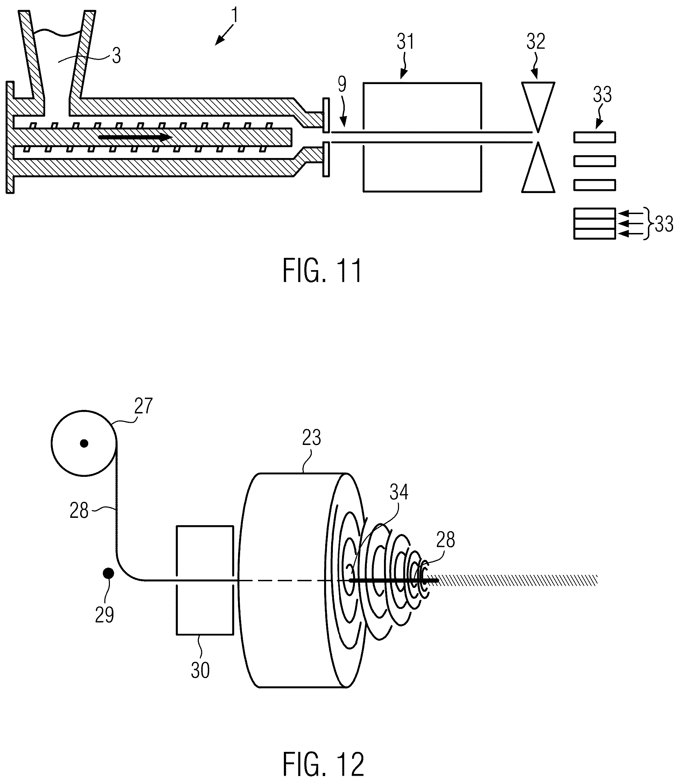

Figure 11 depicts an apparatus for producing an extrudate 9 comprising an aerosol-generating material 23 comprising a dryer 31 adapted to dry the extrudate 9 followed by a cutting device 32 adapted to separate the extrudate 9 into individual segments 33.

The perspective view of Figure 12 shows a susceptor material 28 being fed from a susceptor material feeding device 27 to a center 34 of an aerosol-generating material 23. Since the susceptor material 28 is rotated by a rotation device 30 and pressed into the center 34 of the aerosol-generating material 23, said aerosol-generating material 23 is forced to unwind and wrap around the susceptor material 28, forming an aerosol-generating material 23 encompassing a susceptor material 28.

As depicted in Figure 1, the mixture 3 is provided to the inlet 2 of the extruder 1 via the hopper 4, where the mixture 3 then proceeds to enter the barrel 8 of the extruder 1. The mixture 3 is subsequently transported along the extrusion direction 100 of the extruder 1, due to the rotation of the screw 7, until it reaches the outlet 5 of the extruder 1. During transportation of the mixture 3 along the extrusion direction 100, the mixture 3 is conveyed through the heating zone 19 and a subsequent cooling zone 20, where said mixture 3 is heated and cooled, respectively.

At the outlet 5 of the extruder 1, the mixture 3 is extruded through the die component 10 to form the extrudate 9 comprising aerosol-generating material 23 with a cross-sectional shape.

The mandrel 13 and die plate 11 elements of the die component 10 shown in Figure 2 direct the flow of the mixture 3 during extrusion, so that the resulting cross-sectional shape of the extrudate 9 is circular and manifests a hollow chamber profile. Examples of such cross-sectional shapes are shown in Figures 3 to 8.

Susceptor material 28 can be inserted into the cross-sectional shape of the extrudate 9. As illustrated in Figure 9, this can be achieved by providing the susceptor material 28 via a susceptor material feeding device 27 to the extruder 1. The susceptor material 28 then enters an opening within the extruder 1 and runs along a channel within the screw 7 until it reaches the die component 10 at the outlet 5 of the extruder 1, where the susceptor material 28 is subsequently inserted into the cross-sectional shape of the extrudate 9 during extrusion thereof. During insertion of the susceptor material 28 into the cross-sectional shape of the extrudate 9, the susceptor material 28 is rotated via the rotation device 30.

Alternatively, the susceptor material 28 can also be interested into the cross-sectional shape of the extrudate 9 subsequent to the extrusion thereof, as depicted in Figure 10.

During extrusion of the extrudate 9, the die component 10 is maintained at a temperature between 10 degrees Celsius and 50 degrees Celsius via the cooling unit 21, while also being vibrated via the vibrating component 18, as shown in Figure 1.

Subsequent to being extruded from the extruder 1, the extrudate 9 is dried by the dryer 31, to substantially maintain its cross-sectional shape, prior to being cut into segments 33 by the cutting device 32. Said process steps are depicted in Figure 11.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A ± 10 % of A. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. Extrudate (9) comprising aerosol-generating material (23) with a cross-sectional shape, wherein the cross-sectional shape of the extrudate is a hollow chamber profile (15),
wherein the hollow chamber profile (15) forms a flow channel in the extrudate.

2. Extrudate according to claim 1, wherein the extrudate (9) has a circular cross-section with a diameter between 5 millimeters and 10 millimeters.

3. Extrudate according to any one of the preceding claims, wherein the hollow chamber (15) profile exhibits multiple hollow chambers (22), wherein each hollow chamber (22) forms a flow channel in the extrudate, so that the extrudate (9) exhibits a plurality of flow channels;
wherein the hollow chamber profile (15) manifests multiple hollow chambers (22) surrounded by aerosol-generating material (23).

4. Extrudate according to any one of the preceding claims, wherein the hollow chamber profile (15) has at least one hollow chamber (22) that is round, preferably circular or oval.

5. Extrudate according to any one of the preceding claims, wherein the hollow chamber profile (15) has more than two hollow chambers, wherein the geometry of each hollow chamber may be identical.

6. Extrudate according to any one of claims 1 to 4, wherein the hollow chamber profile has more than two hollow chambers, wherein the geometry of each hollow chamber exhibits divergent contours.

7. Extrudate according to claim 1 or 2, wherein the hollow chamber profile (15) is at least partially in the form of at least one spiral.

8. Extrudate according to any one of claims 1 to 3, wherein the hollow chamber profile (15) is at least partially in the form of at least two rings (25) connected by at least one spoke (26).

9. Extrudate according to any one of claims 1 to 3, wherein the hollow chamber profile (15) exhibits multiple concentric rings (25) connected by multiple spokes (26), both comprising aerosol-generating material (23).

10. Extrudate according to any one of the preceding claims, wherein the hollow chamber profile (15) is in the form of a wagon wheel.

11. Extrudate according to claim 10, wherein the form of the wagon-wheel has spokes (26) manifesting corrugated surfaces (24).

12. Extrudate according to any one of the preceding claims, wherein the extrudate (9) is formed from a mixture comprising plant-based material in the form of material containing at least one alkaloid, water, and an additional aerosol-former, and
wherein the alkaloid comprises nicotine.

13. Extrudate according to claim 12, wherein the material containing at least one alkaloid is homogenized tobacco material, which is formed by agglomerating particulate tobacco containing at least the alkaloid nicotine.

14. Extrudate according to any one of claims 12 to 13, wherein the particles of the material containing at least one alkaloid have a mean particle size between 0.02 millimeters and 0.3 millimeters.

15. Extrudate according to any one of claims 12 to 14, wherein the material containing at least one alkaloid has an aerosol-former content of greater than 3 weight percent of the total amount of material containing at least one alkaloid, preferably an aerosol former content of between 3 weight percent and 30 weight percent, more preferably the aerosol-former is comprised between 7 weight percent to 25 weight percent of the material containing at least one alkaloid;
wherein the aerosol-former is glycerin or propylene glycol.

16. Extrudate according to any one of claims 12 to 15, wherein the mixture comprises cellulose fibers, in particular tobacco stem materials, stalks or other tobacco plant material, or soft-wood fibers, hard wood fibers, jute fibers, flax fibers, tobacco fibers and combination thereof.

17. Extrudate according to any one of the preceding claims, further comprising a binder, wherein the binder is one of
- a natural pectin, such as fruit, citrus or tobacco pectin;
- a guar gum, such as hydroxyethyl guar and hydroxypropyl guar;
- a locust bean gums, such as hydroxyethyl and hydroxypropyl locust bean gum;
- an alginate;
- a starch, such as modified or derivitized starches;
- a cellulose, such as methyl, ethyl, ethylhydroxymethyl and carboxymethyl cellulose;
- a tamarind gum;
- a dextran;
- a pullalon;
- a konjac flour;
- a xanthan gum.

18. Extrudate according to any one of the preceding claims, comprising inserted susceptor material (28).

19. Extrudate segments formed by cutting the extrudate according to any one of the preceding claims into segments with a length between 3 millimeters and 10 millimeters.

20. Aerosol-generating article having flow channels within an extrudate according to any of claims 1 to 18, directly relating to the airflow properties of the aerosol-generating material.
